# EUROPÄISCHE PATENTSCHRIFT

(11) **EP 3 885 128 B1**
(45) Veröffentlichungstag und Bekanntmachung des Hinweises auf die Patenterteilung: **04.09.2024**
(21) Anmeldenummer: 20164815.1
(22) Anmeldetag: 23.03.2020
(51) Int. Cl.: B32B 7/02, B32B 7/06, B32B 27/08, B32B 27/32, B32B 27/30, B32B 27/34, B32B 27/36

(54) **FOLIE, AUS DER EINE VERPACKUNG, INSBESONDERE FÜR LEBENSMITTEL, OPTISCHE GLÄSER, EINZELTEILE FÜR BIOREAKTOREN, SOLARPANEELE OD. DGL. MEHR HERSTELLBAR IST**
FILM FROM WHICH A PACKAGE, IN PARTICULAR FOR FOOD, OPTICAL GLASSES, INDIVIDUAL PARTS FOR BIOREACTORS, SOLAR PANELS OR SIMILAR CAN BE PRODUCED
FEUILLE POUR FABRIQUER UN EMBALLAGE, EN PARTICULIER POUR DENRÉES ALIMENTAIRES, VERRES OPTIQUES, PIÈCES DÉTACHÉES POUR BIORÉACTEURS, PANNEAUX SOLAIRES OU ANALOGUES

(43) Veröffentlichungstag der Anmeldung: 29.09.2021
(73) Patentinhaber: Südpack Verpackungen SE & Co. KG, 88416 Ochsenhausen (DE)
(72) Erfinder: GRIMBACHER, Carolin, 88416 Ochsenhausen (DE); BETZ, Jürgen, 88416 Steinhausen an der Rottum (DE); BRASS, Peter, 88416 Steinhausen an der Rottum (DE)
(74) Vertreter: Christ, Niko

(56) Entgegenhaltungen:
- US-A1- 2002 175 105
- US-A1- 2003 062 114

## Beschreibung

Die Erfindung bezieht sich auf eine Folie, aus der eine Verpackung, insbesondere für Lebensmittel, optische Gläser, Einzelteile für Bioreaktoren, Solar-Paneelen od. dgl. mehr, medizinische Geräte, Pharmaprodukte oder dergleichen herstellbar ist, nach dem Oberbegriff des Patentanspruchs 1.

Solche Folien werden üblicherweise in einem Co-Extrusions-Verfahren gefertigt. Dabei werden in einem Co-Extensions-Werkzeug unterschiedliche Kunststoffe in Form von Granulaten eingefüllt, in einen Schneckenförderer eingegeben, in dem die Kunststoff-Granulate erhitzt und durch Reibung verdichtet sind, und anschließend werden die einzelnen Kunststoff-Schichten in dem Co-Extensions-Werkzeug bandförmig zusammengefügt, sodass eine Folie mit verschiedenen Schichten entsteht. Jede der Schichten kann dabei aus einem Werkstoff bestehen, der entsprechend gewünschte Eigenschaften aufweist, um anschließend nach der Veredelung der Folie eine Verpackung für die vorgenannten Gegenstände zur Verfügung zu stellen. Alternativ kann die Folie auch in einem sog. Blasverfahren mit identischem Schnittaufbau hergestellt sein.

Da die Folie nach der Herstellung oftmals in weiteren Verarbeitungsschritten von einer Rolle abzuwickeln und anschließend zu Transport- und Lagerzwecken aufzurollen ist, können an den freien Oberflächen der Folie Schmutzpartikel oder sonstige Verunreinigungen anhaften, durch die die äußerst empfindlichen zu verpackenden Gegenstände, insbesondere Lebensmittel oder optische Gläser, beschädigt werden. Insbesondere Lebensmittel und Pharmaprodukte sind zudem in einer möglichst staubfreien und oftmals auch sterilen Umgebung zu verpacken, um die empfindlichen Gegenstände dauerhaft lagern zu können bzw. dass diese nicht verunreinigt sind und daher unbrauchbar werden. Die den einzupackenden Gegenständen zugewandte Oberfläche der Folie ist daher partikelfrei oder steril zu halten.

Um eine solche partikelfreie oder sogar sterile Oberfläche der Folie zu erreichen, ist es nachteiliger Weise im bislang bekannten Stand der Technik erforderlich, die Folie in einer sterilen Umgebung von der Rolle abzuwickeln, diese vollständig zu reinigen, also partikelfrei zu machen oder diese zu sterilisieren, um anschließend unverzüglich aus der derart gesäuberten Folie eine Verpackung für die Lebensmittel, optische Gläser oder die Pharmaprodukte herzustellen. Unmittelbar nach der Säuberung der Oberfläche der Folie ist diese daher in der partikelfreien oder sterilen Umgebung zu verwenden. Solche Reinigungsarbeiten sind jedoch äußerst zeit- und folglich kostenintensiv. Zudem ist die Handhabung einer solchen Folie kompliziert und an die jeweiligen Benutzer einer solchen Folie sind enorme medizinische und fachmännische Fähigkeiten vorauszusetzen, um eine den gesetzlichen Normen entsprechende Reinigung der Folienoberfläche zu gewährleisten.

Wenn auf der Oberfläche der Folie während des Transportes bzw. der Lagerung der Folie Schmutzpartikel anhaften, kann die Folie für die Verpackung von optischen Gläsern oder Solar-Paneele nicht mehr verwendet werden, solche Schmutzpartikel die äußerst empfindliche Oberflächenstruktur der optischen Gläser oder SolarPaneele zerstören können. Sobald nämlich kleinste Kratzer oder sonstige Beschädigungen auf den Glasoberflächen solcher Gegenstände entstehen, sind diese optischen Gläser unbrauchbar. Folglich haben die derart als Verpackung eingesetzten Folien einen enormen technischen Anforderungsbedarf, solche empfindlichen Oberflächenstrukturen während deren Lagerung und Transporten abzudecken und diese vor Beschädigungen oder sonstigen Verunreinigungen abzudecken.

Solche Folien und deren Herstellungsverfahren sind insbesondere aus der US 2002/0175105 A1 und US 2003/062114 A1 vorbekannt.

Ausgehend von diesem Stand der Technik ist es daher Aufgabe der Erfindung, eine Folie der eingangs genannten Gattung derart weiterzubilden, dass die Teilung der Folienbahnen vereinfacht ist.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in einer der Schichten ein Additiv in einer dosierbaren Menge vorhanden ist und/oder dass die Materialpaarung zwischen der ersten und zweiten Schicht eine geringe Adhäsionskraft aufweisen, und dass die erste und zweite Schicht in einer Trennebene voneinander zerstörungsfrei lösbar sind, derart, dass die Folie in zwei Folienbahnen aufteilbar ist, ist gewährleistet, dass die Oberfläche der Folie die anschließend dem zu verpackenden Gegenstand in Form von Lebensmitteln, optischen Gläsern, Solar-Paneelen, Pharmaprodukten oder sonstigen medizinischen Geräten zugewandt ist, dauerhaft vor Verunreinigungen insbesondere durch Schmutzpartikel geschützt ist, da diese Oberfläche permanent verschlossen bzw. abgedeckt ist.

Da die derart hergestellte Folie eine Trennebene aufweist, ist zudem erreicht, dass aus der einen Folie zwei Folienbahnen durch Abziehen entstehen, die jeweils einem gesonderten Verwendungszweck zugeführt werden können. Die Schichten der beiden Folienbahnen können dabei identisch oder völlig unterschiedlich ausgestaltet sein, sodass jeder Folienbahn eine individuelle vorgegebene Verpackungseigenschaft zugewiesen werden kann.

Ferner wird dadurch, dass die der Trennebene zugewandte erste Lage der Schicht eine dünnere Wandstärke aufweist als die nachfolgenden Lagen in der Schicht, die für die Trennung erforderlichen Adhäsionskräfte verringert, womit die Teilung der Folienbahnen vereinfacht ist.

Durch die Teilung der Folie in mindestens zwei oder sogar mehrere derart aufgebauten Folienbahnen können demnach mehrere Verwendungen durch eine herstellerseitig vorgefertigte Folie zur Verfügung gestellt sein.

Folglich können vorteilhafter Weise in einem Herstellungsverfahren zwei oder mehrere Folienbahnen zusammengefügt sein, zwischen denen jeweils eine der Trennebenen vorgesehen ist, sodass die Folie aus mehreren voneinander zerstörungsfrei lösbaren Folienbahnen besteht. Jede der Folienbahnen kann dabei unterschiedliche thermodynamische oder sonstige physikalische Eigenschaften aufweisen, um die zu verpackenden Gegenstände optimal vor Beschädigungen, vor Verschmutzungen oder sonstigen Umwelteinflüssen zu schützen. Die Trennung der Folienbahnen voneinander erfolgt dabei derart, dass in mindestens einer der die Folienbahn bildenden Schichten ein Additiv in einer vorgegebenen Menge eingearbeitet ist, durch das die Adhäsionskräfte zwischen den Folienbahnen vorbestimmt ist. Demnach ist eine bestimmte manuelle oder maschinelle Abziehkraft erforderlich, um die Folienbahnen voneinander in der Trennebene zu lösen. Darüber hinaus kann auch die jeweilige Lage der Schichten, die der Trennebene zugewandt ist, eine Materialpaarung aufweisen, die geringe Adhäsionskräfte miteinander ausbilden.

In der Zeichnung ist ein erfindungsgemäßes Ausführungsbeispiel einer Folie mit verschiedenen Kunststoff-Schichten dargestellt, die nachfolgend näher erläutert sind. Im Einzelnen zeigt:
Figur 1 ein schematisches Co-Extensions-Werkzeug, in dem unterschiedliche Kunststoffe erhitzt und verflüssigt sind, durch die eine Folie, die zwei Schichten aufweist, durch die eine Trennebene gebildet ist, derart, dass die Schichten zerstörungsfrei voneinander lösbar sind, im Schnitt,
Figuren 2a die Folie gemäß Figur 1 mit den beiden Schichten, in denen bis 2c jeweils unterschiedliche Lagen aus Kunststoff vorhanden sind,
Figuren 3a verschiedene Anwendungen für die Folie gemäß Figur 1, die in bis 3c zwei Folienbahnen mit unterschiedlichen bzw. identischen Lagen aufgebaut ist.

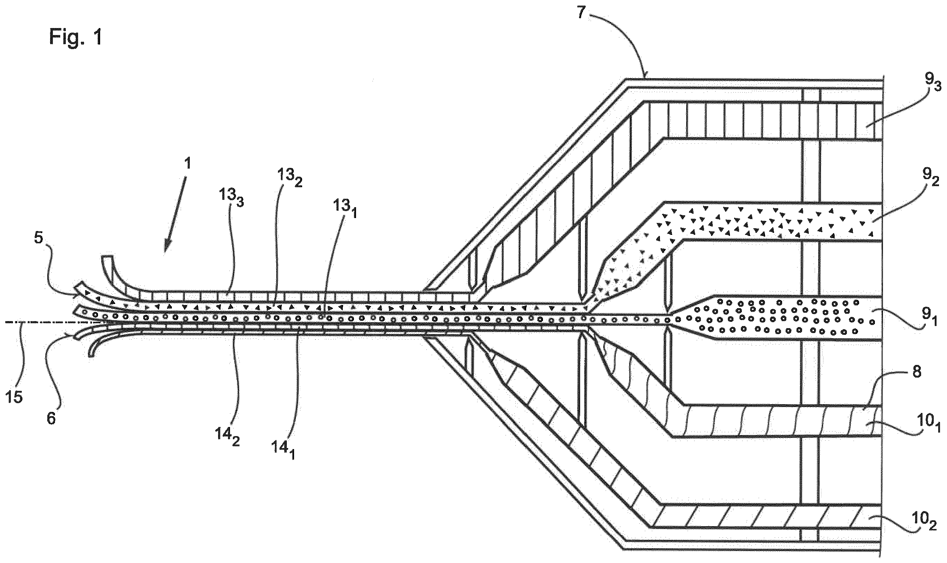

Aus Figur 1 ist ein Co-Extensions-Werkzeug 7 in einem schematischen Aufbau zu entnehmen, in das unterschiedliche Kunststoffe 91-9n bzw. 101-10n eingefüllt sind. Diese Kunststoffe 91-9n bzw. 101-10n können dabei aus unterschiedlichen Werkstoffen hergestellt sein. Die jeweiligen Kunststoffe 91-9n sind dabei einer Folie 1 mit einem oberen Schicht 5 und die Kunststoffe 101-10n sind einer unteren Schicht 6 der Folie 1 zugeordnet. Die jeweiligen Kunststoffe 91-9n bzw. 101-10n werden in einem Co-Extrusions-Verfahren in dem Werkzeug 7 zusammengefügt. Die Trennebene zwischen den beiden Schichten 5 und 6 ist mit der Bezugsziffer 15 gekennzeichnet.

Insbesondere dem Kunststoffen 101 der Schicht 6 ist ein Additiv 8 zugemischt. Sobald die Kunststoffe 91-9n und 101-10n in dem Werkzeug 7 aufgrund Erwärmung zusammengefügt sind und das Werkzeug 7 verlassen, entsteht die Folie 1. Die Folie 1 besteht dabei aus den zwei durch die Trennebene 15 voneinander getrennte Schichten 5 und 6, die jeweils aus mehreren Lagen 131, 132, -13n bzw. 141, 142-14n bestehen. In dem Werkzeug 7 können nämlich beliebig viele Kunststoffe 91-9n bzw. 101-10n zusammengefügt sein. Dabei ist die der Trennebene 15 zugewandte innerste Lage der Schicht 5 mit der Bezugsziffer 131 und die innerste Lage der Schicht 6 bezogen auf die Trennebene 15 mit der Bezugsziffer 141 gekennzeichnet und die von der Trennebene 15 weiter beabstandet anliegen, sind liegen mit einer höheren Ordnungszahl versehen.

Das Zusammenfügen der Kunststoffe 91-9n bzw. 101-10n erfolgt in einer partikelfreien bzw. sterilen Umgebung, da im Inneren des Werkzeuges 7 Verunreinigungen aufgrund der dort vorherrschenden hohen Temperaturen nicht vorhanden sind.

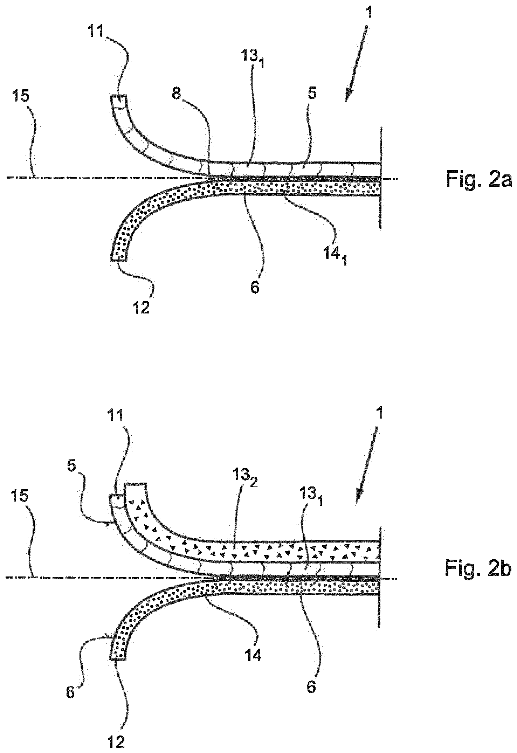

In Figur 2a ist die Folie 1 aus den beiden Schichten 5 und 6 aufgebaut, die jeweils eine Lage 131 bzw. 141 aufweisen. Das Additiv 8 ist dabei in der Lage 141 eingemischt, und zwar in einer vorgegebenen Menge. Nach der Veredelung der Folie 1 kann die Lage 131 von der Lage 141 zerstörungsfrei gelöst sein, sodass zwei Folienbahnen 11 und 12 entstehen, die den ursprünglichen Schichten 5 bzw. 6 entsprechen.

Da die Schichten 5 und 6 im Inneren des Werkzeuges 7 in einer sterilen, zumindest partikelfreien Umgebung zusammengefügt sind, verbinden und verschließen sich die zugewandten Oberflächen der Lagen 131 und 141 vollständig miteinander. Demnach können während des Lagerungs- und Transportzustandes der Folie 1 keinerlei Schmutzpartikel an diese Oberflächen der Folienbahnen 11 und 12 gelangen. Darüber hinaus kann die Folie 1 auf eine Rolle 16 zu Lagerungs- und Transportzwecken aufgewickelt sein. Während des Verarbeitungsprozesses der Folie 1 ist diese oftmals mehrfach von der Rolle 16 abzuwickeln und zu bearbeiten. Durch das Abwickeln der Folie 1 von der Rolle 16 und während des Verarbeitungsprozesses sind die Oberflächen der Schichten 5 und 6 miteinander verbunden, sodass während dieser Bearbeitungsphase keinerlei Schmutzpartikel oder sonstige Verunreinigungen an die der Trennebene 15 zugewandte Oberfläche der Folienbahnen 11 bzw. 12 gelangen können.

Figur 2b zeigt eine Folie 1 mit den beiden Schichten 5 und 6. Die Schicht 5 besteht dabei nunmehr aus zwei Lagen 131 und 132, die aus unterschiedlichen Kunststoffen aufgebaut sind. Demnach ist die physikalische Eigenschaft der Folienbahnen 11 zu den physikalischen Eigenschaften der Folienbahn 12 unterschiedlich. Gleichwohl können die Schichten 5 und 6 in der gemeinsamen Trennebene 15 zerstörungsfrei voneinander gelöst sein, um die Folienbahnen 11 bzw. 12 herzustellen.

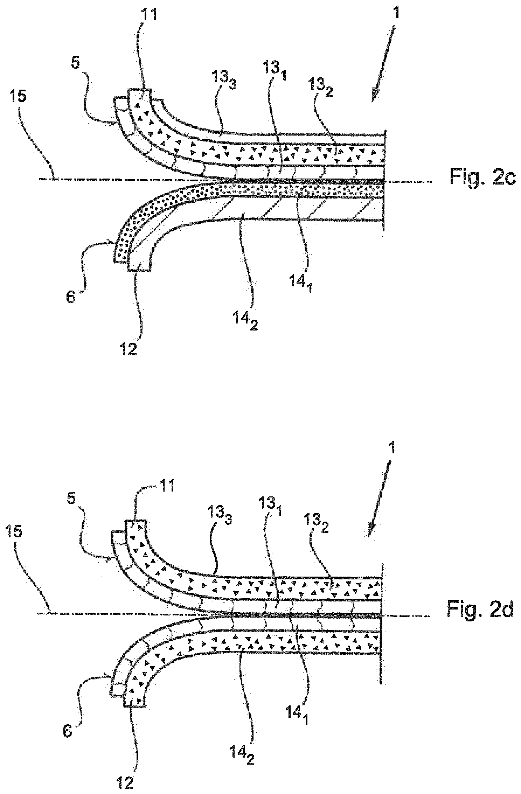

In Figur 2c besteht die Schicht 5 aus drei Lagen 131, 132 und 133 und die Schicht 6 aus zwei Lagen 141 und 142, die jeweils unterschiedliche Kunststoffe aufweisen bzw. aus diesen gebildet sind. Dabei ist ein besonderer Verwendungszweck der Folienbahn 11 beispielsweise darin zu sehen, dass durch diese eine Verpackung 2 für ein Lebensmittel 3 zur Verfügung gestellt ist, die eine Sauerstoff-Scavanger-Lage 132 aufweist. Der Scavanger-Bestandteil kann prinzipiell auch in eine weitere äußeren Lage 133 oder 134 angeordnet sein. Dann sollte eine Barriere in der Lage 132 oder 135, also räumlich von der Trennebene 15 beabstandet vorgesehen sein. Technisch würde man versuchen, eine Scavanger- Lage 131 einzufügen, damit dieser nach der Aktivierung möglichst schnell mit Sauerstoff reagieren kann.

Es ist folglich eine Kombination einer Scavanger- Lage 131 mit einer Barriere-Schicht 132 vorzusehen, um zunächst den Scavanger-Bestandteil zu schützen, so dass diese nicht reagieren kann und seine ursprüngliche Beschaffenheit beibehält.

Der Reaktionsstartzeitpunkt, ab wann die Lage 131 Sauerstoff aufnimmt, kann normalerweise nicht exakt bestimmt sein. Sobald Sauerstoff an diese Lage 131 gelangt, beginnt die Reaktion. Die Aufnahmekapazität einer solchen Sauerstoff aufnehmenden Lage 131 ist jedoch begrenzt, sodass der Hersteller eines Lebensmittels 3 oftmals wünscht, dass der Reaktionsstartzeitpunkt zur Sauerstoffaufnahme unmittelbar mit dem Verpackungszeitpunkt des Lebensmittels 3 beginnt. Ein solcher vorgegebener Beginn des Reaktionsstartzeitpunkts oder Sauerstoffaufnahme ist bislang nicht möglich; Erst mit vorstehend erläutertem Schichtaufbau der jeweiligen Schicht 5, 6 und dessen Versiegelungsmittel der zweiten Schicht 6, ist dieses Ziel erreicht. Die Schicht 6 enthält eine Sauerstoff-barriere und schützt den Scavanger also in diesem Ausführungsbeispiel der Lage 131 vor einer ungewollten Reaktion mit Sauerstoff. Deshalb muss auch in der Schicht 5, von außen gesehen vor dem Scavanger, eine Sauerstoffbarriere vorgesehen sein.

Da nunmehr die Lage 131 aus einem Sauerstoff aufnehmenden oder bindenden Substrat, bspw. Scavanger, gebildet ist, die durch die Schicht 6 vollständig abgedeckt ist und zudem sowohl die Schicht 5 als auch die Schicht 6 der Folie 1 eine Sauerstoff-Barriere-Lage 131 bzw. 142 aufweist, ist die Sauerstoff aufnehmende Lage 131 während des Transport- und Lagerungszustandes vollständig von der Zufuhr von Sauerstoff geschützt. Somit entsteht ein einstellbarer Reaktionsstartzeitpunkt erst durch die Abnahme der Folienbahn 12 von der Folienbahn 11 und die Folienbahn 11 kann unmittelbar demnach als Verpackung für das Lebensmittel 3 eingesetzt sein.

In Figur 2d ist der Aufbau der Schichten 5 und 6 identisch, sodass zwei Folienbahnen 11 und 12 mit identischen physikalischen Eigenschaften vorhanden sind.

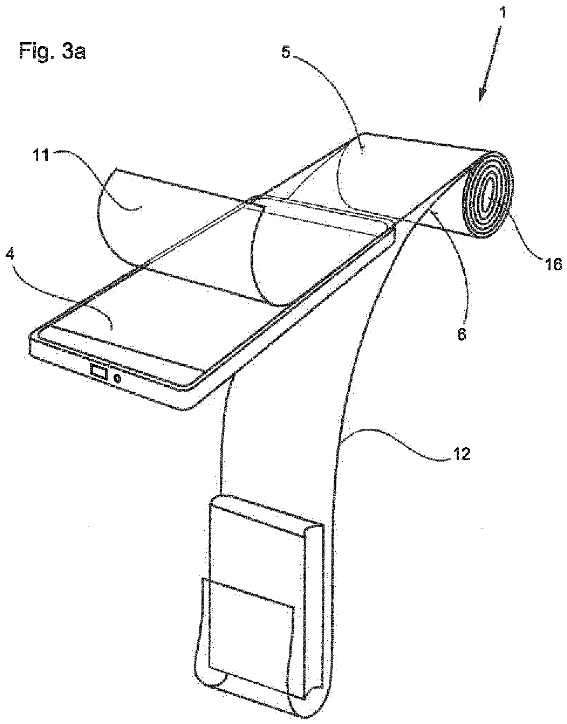

In Figur 3a ist gezeigt, wie die Folie 1 von der Rolle 16 abgewickelt und unmittelbar voneinander zerstörungsfrei in die zwei Folienbahnen 11 und 12 getrennt sind. Dabei kann die Folienbahn 11 mit ihrer partikelfreien Oberfläche unmittelbar auf ein Glaspaneel eines iPhones aufgelegt werden, sodass zwischen dem elektrischen Gerät bzw. dessen Glasoberfläche und der partikelfreien Oberfläche der Folienbahn 11 keinerlei Verunreinigungen entstehen. Die Folienbahn 11 kann in identischer Weise zur Verpackung von Pharmaprodukten, Solar-Paneelen, medizinischen Geräten, die steril einzupacken sind, zudem sollen Verpackungen für Einzelteile von oder für Bioreaktoren mitumfasst sein oder dergleichen verwendet sein. Hierbei handelt es sich lediglich um eine beispielhafte Darstellung.

Die Folienbahn 12 kann einem anderen Verwendungszweck zugeführt werden, um beispielsweise Zeitungen, Zeitschriften oder sonstigen vor Regenwasser zu schützenden Produkten zu verpacken, die eine geringere Anforderung an die Oberflächenbeschaffenheit der Folienbahn 12 stellen.

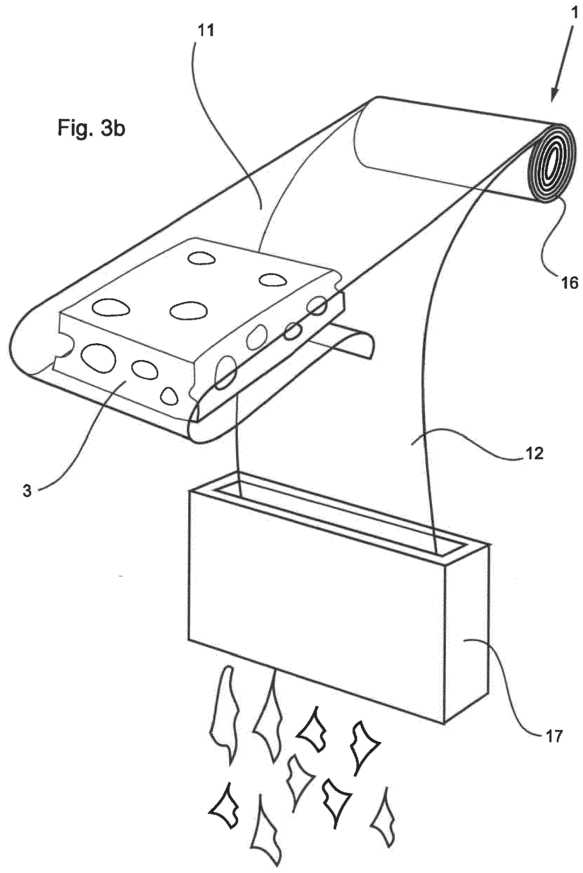

In Figur 3b ist gezeigt, dass die Folienbahn 11 mit ihrer partikelfreien Oberfläche dem Lebensmittel 3 zugewandt ist, um dieses vollständig luft- und wasserdicht zu verschließen. Die Folienbahn 11 kann dabei auch tiefgezogen oder in sonstiger Art und Weise perforiert sein, wenn dies kundenseitig gewünscht ist.

Die Folienbahn 12 besteht aus einem Werkstoff oder einer Werkstoffpaarung, die recycelbar ist oder die aus Rezyklat besteht. Dies ist schematisch durch den Recycle-Apparat 17 dargestellt.

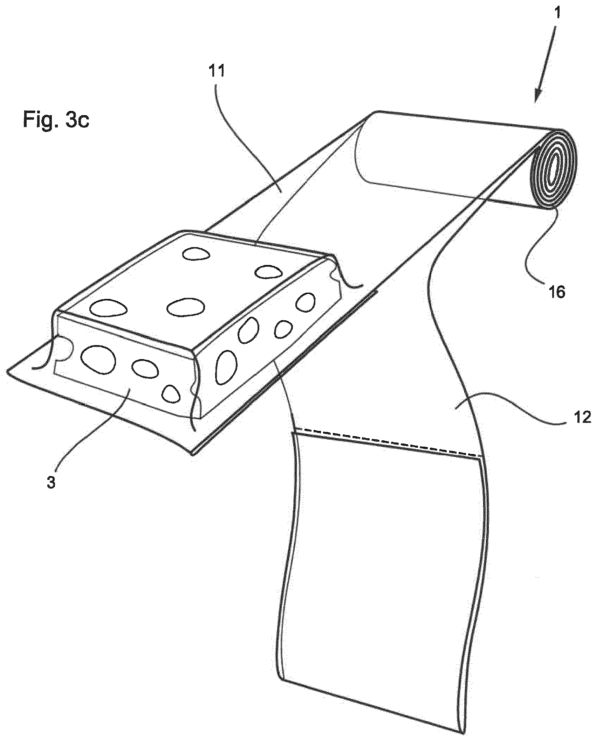

In Figur 3c ist gezeigt, dass die identischen Folienbahnen 11 und 12 gleichzeitig zur Verpackung eines Lebensmittels 3 eingesetzt werden können.

Die Teilung der Folienbahnen 11 und 12 zu vereinfachen, kann es vorteilhaft sein, wenn die der Trennebene 15 zugewandte erste Lage 141 der Schicht 6 eine dünnere Wandstärke aufweist als die nachfolgenden Lagen 142-14n in der Schicht 6, denn dadurch können die für die Trennung erforderlichen Adhäsionskräfte verringert sein.

Die Kunststoffe 91-9n bzw. 101-10n für die Schichten 5 und 6 sind aus den Polyolefin-Werkstoffen LDPE, LLDPE, mLLDPE, HDPE, PPCopo oder PPhomo gebildet. Darüber hinaus können die Lagen 131-13n bzw. 141-14n der Schichten 5 und 6 aus einem thermoplastischen Kunststoff, beispielsweise den Vorgenannten gebildet sein. Die Trennebene 15 weist eine Polymer-Paarung aus den Werkstoffen der Polyolefine, insbesondere eine Paarung Polyolefin/PA, Polyolefin/EVOH oder Polyolefin/PET auf. Zwischen diesen Schichten ist in der Regel ein Haftvermittler vorgesehen, dieser ist ebenfalls polyolefinisch angeordnet.

Darüber hinaus können in der der Trennebene 15 zugewandten Lagen 131 bzw. 141 antistatische oder sonstige oberflächenaktive Substanzen eingemischt sein. Solche Substanzen sind auf den Verwendungszweck der jeweiligen Folienbahn 11 bzw. 12 abzustimmen, sodass beispielsweise auch elektrische Geräte, Akkumulatoren, sonstige elektrisch leitfähige Bauteile durch die jeweilige Folienbahn 11 bzw. 12 antistatisch gelagert werden können.

## Patentansprüche

1. Folie (1), aus der eine Verpackung (2) insbesondere für Lebensmittel (3), optische Gläser (4), Einzelteile für Bioreaktoren, Solar-Paneelen, medizinische Geräte, Pharmaprodukte herstellbar ist,
bestehend aus mindestens zwei Kunststoff-Schichten (5, 6), die in einem Co-Extrusions-Werkzeug (7) zu der Folie (1) zusammengefügt sind,
- wobei in einer der Schichten (5 oder 6) ein Additiv (8) in einer dosierbaren Menge vorhanden ist und dass die Materialpaarung zwischen der ersten und zweiten Schicht (5, 6) eine Trennebene (15) mit einer geringen Adhäsionskraft aufweist, derart, dass die der Trennebene (15) zugewandte jeweilige erste Lage (13₁; 14₁) der beiden Schichten (5, 6) aus einer Polymer-Paarung oder miteinander unverträglichen Polymeren gebildet sind, die keine oder geringe Adhäsionskräfte aufweisen, vorzugsweise aus den Material-Paarungen Polyolefin/PA, Polyolefin/EVOH oder Polyolefin/PET ,
- und dass die erste und zweite Schicht (5, 6) in der Trennebene (15) voneinander zerstörungsfrei lösbar sind, derart, dass die Folie (1) in zwei Folienbahnen (11, 12) aufteilbar ist.
**dadurch gekennzeichnet,**
**dass** die zweite Schicht (6) aus mehreren unterschiedlichen Lagen (14₁, 14₂, ...14ₙ) besteht und dass die der Trennebene (15) zugewandte erste Lage (14₁) eine dünnere Wandstärke als die nachfolgenden Lagen (14₂, ...14ₙ) aufweist.

2. Folie nach Anspruch 1,
**dadurch gekennzeichnet,**
**dass** in einer oder beiden Schichten (5, 6) mindestens eine Sauerstoff-Barriere-Lage (13₁ bzw. 14₂) und eine Sauerstoff bindende Substrat-Lage (13₂ bzw. 14s) innerhalb einer der beiden Schichten (5, 6) eingearbeitet ist, und/oder dass diese Sauerstoff-Barriere-Lage (13₁, 14₂) von mindestens einer weiteren Lage (13₂, 14s), die von der Trennebene (15) weiter weg beabstandet ist, abgedeckt bzw. umschlossen ist.

3. Folie nach Anspruch 2,
**dadurch gekennzeichnet,**
**dass** die Sauerstoff-Barriere (13₁, 14₂) aus den Werkstoffen EVOH, PLA, PVOH, PA oder PET gebildet ist.

4. Folie nach einem der vorgenannten Ansprüche,
**dadurch gekennzeichnet,**
**dass** die Kunststoffe (9₁ bis 9ₙ bzw. 10₁ bzw. 10ₙ) aus einem Polyolefin-Werkstoff für die jeweiligen Lagen (13₁...13ₙ, 14₁...14ₙ) als LDPE, LLDPE, mLLDPE, HDPE, PPhomo oder PPCopo gebildet sind und dass der Schichtaufbau der ersten Schicht (5) unterschiedliche Lagen (13₁...13ₙ) aus diesen Werkstoffen aufweist, die wahlweise (13₁...13ₙ) durch Lagen aus einem anderen Kunststoffmaterial getrennt sind.

5. Folie nach Anspruch 1,
**dadurch gekennzeichnet,**
**dass** in einer der Schichten (5 oder 6) eine oberflächenaktive Substanz zugesetzt ist, durch die die Adhäsionskräfte zwischen den auseinanderliegenden Lagen (13₁; 14₁) der beiden Schichten erhöht oder reduziert ist.

6. Folie nach einem der vorgenannten Ansprüche,
**dadurch gekennzeichnet,**
**dass** nach der Trennung der beiden Schichten (5, 6) voneinander die zwei unabhängigen Folienbahnen (11, 12) gebildet sind, die jeweils einem unterschiedlichen Verwendungszweck oder Einsatzgebiet zuführbar sind und dass die jeweilige vor der Trennung zugewandten Oberflächen der Folienbahnen (11,12) partikelfrei und/oder steril ist.

## Claims

1. A film (1) from which a package (2) can be produced, in particular for food (3), optical glasses (4), individual parts for bioreactors, solar panels, medical devices and pharmaceutical products,
consisting of at least two plastic layers (5, 6), which are joined together in a coextrusion tool (7) to form the film (1),
- wherein an additive (8) is present in one of the layers (5 or 6) in a metered quantity and in that the material pairing between the first and second layer (5, 6) has a separation plane (15) with a low adhesion force, such that the respective first layer (13₁; 14₁) of the two layers (5, 6) facing the separation plane (15) is formed from a polymer pairing or from incompatible polymers which have no or low adhesion forces, preferably from the material pairings polyolefin/PA, polyolefin/EVOH or polyolefin/PET,
- and in that the first and second layers (5, 6) can be separated from one another in the separation plane (15) in a non-destructive manner in such a way that the film (1) can be divided into two film webs (11, 12)
**characterized in that**
the second layer (6) consists of several different layers (14₁, 14₂, ...14ₙ) and **in that** the first layer (14₁) facing the separation plane (15) has a thinner wall thickness than the subsequent layers (14₂, ...14ₙ).

2. The film according to claim 1,
**characterized in that**
at least one oxygen barrier layer (13₁ or 14₂) and one oxygen-binding substrate layer (13₂ or 14₃) is incorporated in one or both layers (5, 6) within one of the two layers (5, 6), and/or **in that** this oxygen barrier layer (13₁, 14₂) is covered or enclosed by at least one further layer (13₂, 14₃) which is spaced further away from the separation plane (15).

3. The film according to claim 2,
**characterized in that**
the oxygen barrier (13₁, 14₂) is formed from the materials EVOH, PLA, PVOH, PA or PET.

4. The film according to any one of the preceding claims,
**characterized in that**
the plastics (9₁ to 9ₙ or 10₁ or 10ₙ) are formed from a polyolefin material for the respective layers (13₁ ...13ₙ, 14₁ ...14ₙ) as LDPE, LLDPE, mLLDPE, HDPE, PPhomo or PPCopo and that the layer structure of the first layer (5) has different layers (13₁ ...13ₙ) of these materials, which are optionally (13₁ ...13ₙ) separated by layers of another plastic material.

5. The film according to claim 1,
**characterized in that**
a surface-active substance is added to one of the layers (5 or 6), as a result of which the adhesive forces between the layers (13₁; 14₁) of the two layers lying apart are increased or reduced.

6. The film according to any one of the preceding claims,
**characterized in that**
after separation of the two layers (5, 6) from one another, the two independent film webs (11, 12) are formed, each of which can be fed to a different intended use or area of application, and **in that** the respective surfaces of the film webs (11, 12) facing one another before separation are particle-free and/or sterile.

## Revendications

1. Un film (1) à partir duquel un emballage (2) peut être produit, en particulier pour les aliments (3), les verres optiques (4), les pièces individuelles pour les bioréacteurs, les panneaux solaires, les dispositifs médicaux et les produits pharmaceutiques,
constitué d'au moins deux couches de plastique (5, 6), qui sont assemblées dans un outil de coextrusion (7) pour former le film (1),
- dans lequel un additif (8) est présent dans l'une des couches (5 ou 6) en quantité mesurée et dans lequel l'appariement de matériaux entre la première et la deuxième couche (5, 6) présente un plan de séparation (15) avec une faible force d'adhésion, de sorte que la première couche respective (13₁; 14₁) des deux couches (5, 6) faisant face au plan de séparation (15) soit formée d'un couple de polymères ou de polymères incompatibles qui n'ont pas ou peu de forces d'adhésion, de préférence des couples de matériaux polyoléfine/PA, polyoléfine/EVOH ou polyoléfine/PET,
- et en ce que la première et la deuxième couche (5, 6) peuvent être séparées l'une de l'autre dans le plan de séparation (15) de manière non destructive, de sorte que le film (1) peut être divisé en deux bandes de film (11, 12)
**caractérisé en ce**
**que** la deuxième couche (6) est constituée de plusieurs couches différentes (14₁, 14₂, ...14ₙ) et en ce que la première couche (14₁) faisant face au plan de séparation (15) a une épaisseur de paroi plus fine que les couches suivantes (14₂, ...14ₙ).

2. Le film selon la revendication 1,
**caractérisé en ce**
**qu'**au moins une couche de barrière à l'oxygène (13₁ ou 14₂) et une couche de substrat qui lie l'oxygène (13₂ ou 14₃) sont incorporées dans l'une des ou les deux couches (5, 6) au sein l'une des deux couches (5, 6), et/ou que cette couche de barrière à l'oxygène (13₁, 14₂) est recouverte ou enfermée par au moins une autre couche (13₂, 14₃) qui est plus éloignée du plan de séparation (15).

3. Le film selon la revendication 2,
**caractérisé en ce**
**que** la barrière à l'oxygène (13₁, 14₂) est formée à partir des matériaux EVOH, PLA, PVOH, PA ou PET.

4. Le film selon l'une quelconque des revendications précédentes,
**caractérisé en ce**
**que** les matières plastiques (9₁ à 9ₙ ou 10₁ ou 10ₙ) sont formées à partir d'un matériau polyoléfine pour les couches respectives (13₁ ...13ₙ, 14₁ ....14ₙ) comme LDPE, LLDPE, mLLDPE, HDPE, PPhomo ou PPCopo et que la structure de la première couche (5) comporte différentes couches (13₁ ...13ₙ) de ces matériaux, qui sont de choix (13₁ ...13ₙ) séparées par des couches d'un autre matériau plastique.

5. Le film selon la revendication 1,
**caractérisé en ce**
**qu'**une substance tensioactive est ajoutée à l'une des couches (5 ou 6), ce qui a pour effet d'augmenter ou de réduire les forces d'adhésion entre les couches (13₁; 14₁) des deux couches séparées.

6. Le film selon l'une quelconque des revendications précédentes,
**caractérisé en ce**
**qu'**après la séparation des deux couches (5, 6) l'une de l'autre, les deux bandes de film indépendantes (11, 12) sont formées, chacune pouvant être destinée à un usage ou à un domaine d'application différent, et **en ce que** les surfaces respectives des bandes de film (11, 12) se faisant face avant la séparation sont exemptes de particules et/ou stériles.
